**Europäisches Patentamt**

**European Patent Office**

**Office européen des brevets**

(19)

(11) Veröffentlichungsnummer: **0 105 204**
**B1**

(12) # EUROPÄISCHE PATENTSCHRIFT

(45) Veröffentlichungstag der Patentschrift:
**15.01.86**

(21) Anmeldenummer: **83108630.1**

(22) Anmeldetag: **01.09.83**

(51) Int. Cl.⁴: **B 60 C 25/00,** B 60 C 15/02

(54) Verfahren zur Montage eines Reifens.

(30) Priorität: **09.09.82 DE 3233441**

(43) Veröffentlichungstag der Anmeldung:
**11.04.84 Patentblatt 84/15**

(45) Bekanntmachung des Hinweises auf die Patenterteilung:
**15.01.86 Patentblatt 86/3**

(84) Benannte Vertragsstaaten:
**AT BE CH DE FR GB IT LI LU NL SE**

(56) Entgegenhaltungen:
**DE-A-2 418 751**
**DE-C-724 314**
**US-A-3 095 920**

(73) Patentinhaber: **Continental Gummi- Werke Aktiengesellschaft, Königsworther Platz 1, D-3000 Hannover 1 (DE)**

(72) Erfinder: **Seitz, Hans, Dr.Dipl.- Ing., Grafenbergerstrasse 5 B, D-3012 Langenhagen 1 (DE)**
Erfinder: **Frerichs, Udo, Buchenweg 7, D-3012 Langenhagen 8 (DE)**
Erfinder: **Rach, Heinz- Dieter, Planetenring 32, D-3006 Garbsen 1 (DE)**
Erfinder: **Spendel, Siegmund, Dorfstrasse 25, D-3211 Betheln (DE)**

EP 0 105 204 B1

## Beschreibung

Die Erfindung betrifft ein Verfahren zur Montage eines Reifens auf eine Felge, für Reifen, bei denen entweder der axiale Abstand der Wülste in der Vulkanisierstellung wesentlich größer ist als die Lauffflächenbreite und die Wülste gegebenenfalls um den Kern schwenkbar sein können oder bei denen der axiale Abstand der Wülste in der Vulkanisierstellung etwa gleich oder kleiner ist als die Lauffflächenbreite, und für Felgen, bei denen die Sitzflächen für die Reifenwülste am inneren Umfang der Felge neben jeweils einem sich radial nach innen erstreckenden Felgenhorn angeordnet sind und bei denen sich neben den Sitzflächen umlaufende Vertiefungen befinden, deren Grund einen im Vergleich zum Durchmesser der Sitzflächen größeren Durchmesser aufweist.

Ein Fahrzeugrad mit einem Reifen und einer Felge der angegebenen Art ist z.B. in der DE-A 30 00 428 beschrieben. Insbesondere, wenn bei der Felge dieses bekannten Rades das übliche Tiefbett weggelassen wird, kann es zu erheblichen Montageschwierigkeiten für den Reifen kommen.

Die erste Schwierigkeit besteht schon darin, den Reifen mit einem Wulst außen über die Felge hinwegzuführen. Dies war bei einem bisher durchgeführten Verfahren mit einer gewissen Schrägstellung der Felge nur unter großer Kraftanstrengung möglich.

Noch schwieriger gestaltete sich die Überwindung des nach radial innen sich erstreckenden Felgenhorns zum Einführen eines Reifenwulstes auf den jeweiligen radial innen liegenden Wulstsitz der Felge. Dies wurde dadurch versucht, daß man die Wulstkerne des Reifens so biegsam gestaltete, daß sie in eine Form gebracht werden konnten, deren Maximaldurchmesser kleiner war als der von den Felgenhörnern gebildete Durchmesser. Eine derartige Verformung war jedoch allenfalls dann möglich, wenn man die Seitenwände des Reifens besonders lang ausbildete, und außerdem schuf sie Sicherheitsprobleme.

Der Erfindung liegt deshalb die Aufgabe zugrunde, ein einfaches Verfahren zur Montage eines Reifens auf eine Felge bei einem Fahrzeugrad der eingangs beschriebenen Art anzugeben.

Diese Aufgabe wird erfindungsgemäß durch die aufeinander folgenden Verfahrensschritte gelöst:

a) Felge und Reifen werden aufeinander zubewegt, wobei die Drehachsen im wesentlichen senkrecht mit maximalen Abweichungen bis zu ± 25° aufeinander stehen,

b) die Felge wird in Richtung der Drehachse des Reifens in dessen Innenraum hineingeführt, wobei zumindest der eine Reifenwulst zwischenzeitlich eine ovale Form annimmt,

c) die Felge wird gedreht, so daß die Drehachse der Felge und die des Reifens parallel verlaufen bzw. zusammenfallen,

d) im Falle eines Reifens mit großem axialem Wulstabstand wird dar Reifen im Wulst- bzw. Seitenwandbereich so weit gekrempelt, bis die Sitzfläche am Reifenwulst und die Sitzfläche auf der Felge im querschnitt etwa parallel zueinander verlaufen,

e) eine Partie des Wulstes wird in die Felgenvertiefung eingeführt und danach der Wulst über seinen gesamten Umfang nachgeschoben,

f) die Verfahrensschritte d) und e) werden beim anderen Wulst wiederholt,

g) die Wülste werden durch eine Beaufschlagung des Reifens mit Luft auf die Felgensitzflächen gebracht.

Die Erfindung bietet den Vorteil, daß die Montage eines Reifens zumindest teilweise maschinell durchzuführen ist und daß keine sehr großen Kräfte aufzuwenden sind.

Besonders günstig und reifenschonend läßt sich das Montageverfahren durchführen, wenn gemäß einer Ausgestaltung der Erfindung der Reifen bei der Montage in seinem Wulstbereich durch Außenkräfte in eine ovale Form gebracht wird.

Das erfindungsgemäße Montageverfahren eignet sich sowohl für Reifen, die mit breit auseinanderliegenden Wülsten vulkanisiert worden sind, d.h. mit einem axialen Wulstabstand, der etwa das Zweifache der Lauffflächenbreite betragen kann, als auch für solche, bei denen der Wulstabstand in der Vulkanisierstellung etwa der Lauffflächenbreite entspricht oder kleiner ist. Bei der ersten Art von Reifen kann es zweckmäßig oder bei relativ kurzen Seitenwänden sogar erforderlich sein, zur besseren Handhabung die Wülste um die Wulstkerne schwenkbar auszubilden. Dies kann z.B. durch das Einfügen nicht gummierter Gewebeeinlagen um den Kern erreicht werden.

Nachfolgend wird das erfindungsgemäße Verfahren anhand einer Zeichnung näher erläutert. Es zeigt schematisch

Fig. 1 eine teilweise in einen Reifen eingeführte Felge,

Fig. 2 Reifen und Felge in der Stellung der Fig. 1 in einer Draufsicht,

Fig. 3 die Felge im Innenraum des Reifens, die Drehachsen parallel zueinander, ein Wulst so weit gekrempelt, daß seine Sitzfläche etwa parallel zur Sitzfläche der Felge verläuft,

Fig. 4 das Rad mit einer in die Felgenvertiefung eingeführten Wulstpartie,

Fig. 5 das Rad mit dem vollständig montierten Reifen,

Fig. 6 ein weiteres Rad mit einer teilweise eingeführten Felge, Drehachsen senkrecht aufeinander,

Fig. 7 das Rad nach Fig. 6, Felge im Innenraum des Reifens, Drehachsen parallel zueinander.

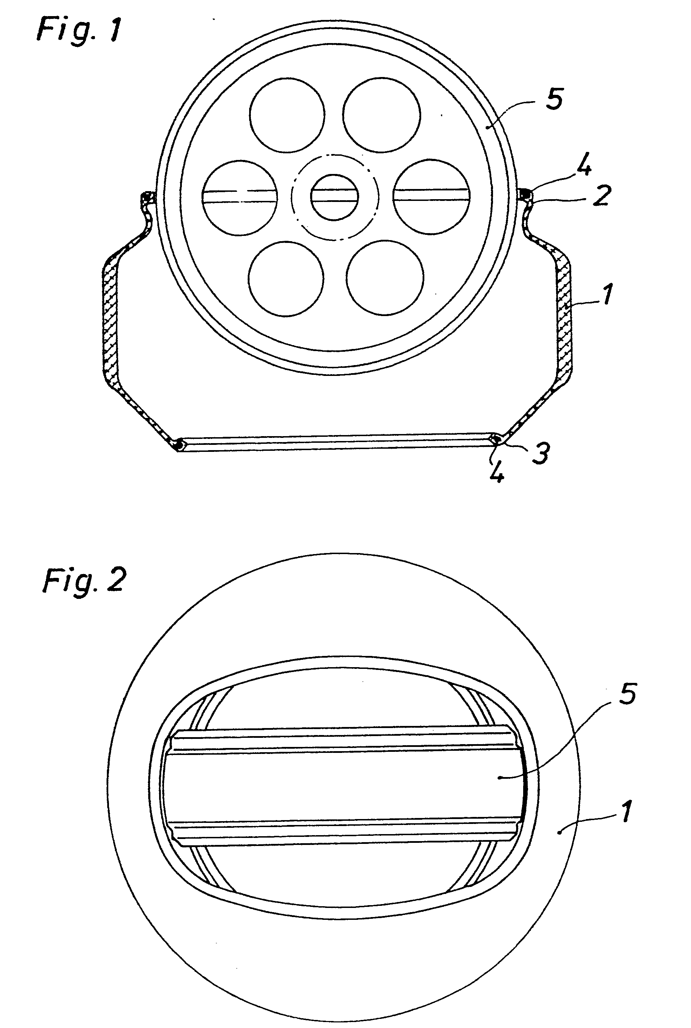

Das Montageverfahren wird zunächst anhand der Fig. 1 bis 5 mit einem Reifen 1 erläutert, bei dem die Wülste 2, 3 sehr weit auseinanderliegen. In der Vulkanisierstellung entspricht ihr axialer Abstand etwa der zweifachen Lauffflächenbreite. In den Wülsten 2, 3 befinden sich zug- und druckfeste Wulstkerne 4. Bei Bedarf können die

Wülste 2, 3 um den Wulstkern 4 schwenkbar ausgebildet sein. Dies ist besonders bei relativ kurzen Seitenwänden erforderlich. Die Schwenkbarkeit kann z.B. durch eine Ummantelung der Kerne 4 mit einem nichtgummierten Gewebe erzielt werden.

Wenn nachfolgend von einer Bewegung der Felge auf den Reifen zu gesprochen wird, so steht immer die Relativbewegung im Vordergrund, d.h. eine solche Bewegung ist gleichbedeutend mit einer Bewegung des Reifens in Richtung auf die Felge oder mit einer gleichzeitigen Bewegung von Reifen und Felge. Die Drehachse des Reifens und der Felge soll definitionsgemäß identisch sein mit der Drehachse des montierten Rades.

In einem ersten Verfahrensschritt wird eine Felge 5 mit senkrecht zur Drehachse des Reifens 1 stehender Drehachse gemäß Fig. 1 auf den Reifen 1 zubewegt und dann in seinen Innenraum eingeführt. Dabei ist der Reifen 1 in seinem einen Wulstbereich 2 zu einem Oval verformt. Besonders einfach und reifenschonend gestaltet sich das Einführen der Felge 5, wenn die Verformung des Reifens 1 bereits vor dem Einführen der Felge 5 durch Außenkräfte vorgenommen wird, z.B. durch ein Einspannen des Reifens 1 in eine Haltevorrichtung.

Fig. 2 zeigt den Reifen 1 und die Felge 5 in der relativen Stellung gemäß Fig. 1, jedoch in einer Draufsicht, d.h. die Blickrichtung ist um 90° geschwenkt. Nachdem die Felge 5 so weit in den Innenraum des Reifens 1 eingeführt ist, daß ihre Drehachse in der Mittelebene des Reifens liegt, wird sie um 90° gedreht, so daß die Drehachse der Felge 5 und die des Reifens 1 parallel verlaufen bzw. zusammenfallen.

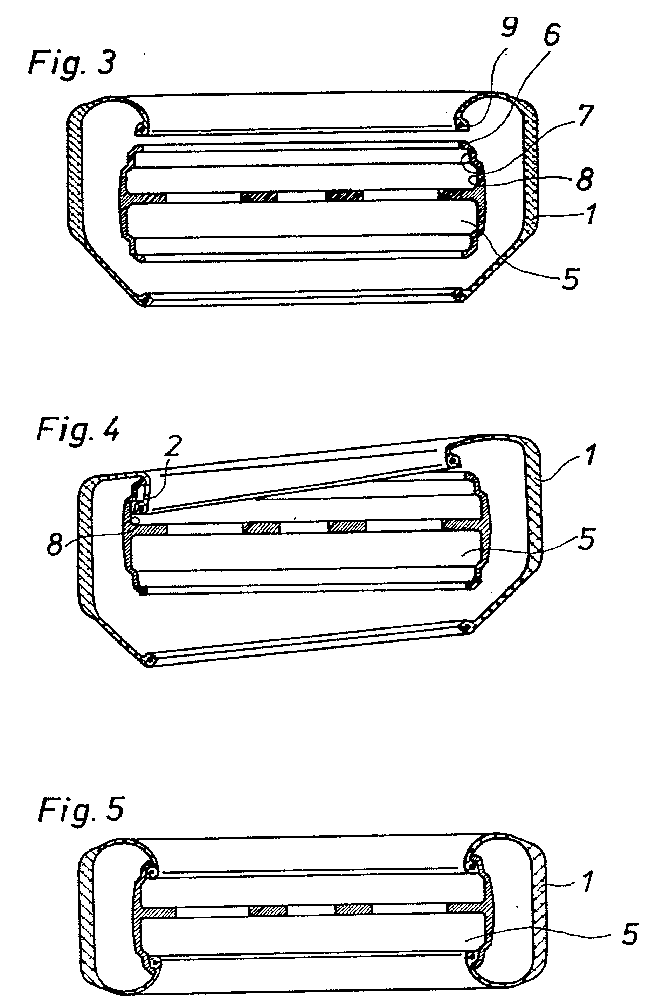

Die Felge 5 befindet sich gemäß Fig. 3 nun vollständig im Innenraum des Reifens 1. An der Felge 5 ist in dieser Darstellung das Felgenhorn 6, die Sitzfläche 7 für den Reifen und eine Vertiefung 8 deutlich zu erkennen.

Als nächstes wird der Reifen 1 im Bereich des einen Wulstes 2 und gegebenenfalls in dem angrenzenden Seitenwandbereich so weit gekrempelt, daß die Sitzfläche 9 am Reifenwulst 2 und die Sitzfläche 7 auf der Felge 5 im Querschnitt etwa parallel zueinander verlaufen. Dabei wird gegebenenfalls der Wulst 2 ein Stück um den Wulstkern 4 geschwenkt.

Danach wird eine Partie des Wulstes 2 in die Felgenvertiefung 8 eingeführt (Fig. 4) und der Wulst 2 über seinen gesamten Umfang nachgeschoben. Die Felgenvertiefung 8 ist derart bemessen, daß der Wulst 2 das Felgenhorn 6 gerade eben überwinden kann. Das Nachschieben des Wulstes 2 über seinen gesamten Umfang kann mittels einfacher Rollenanordnungen maschinell erfolgen.

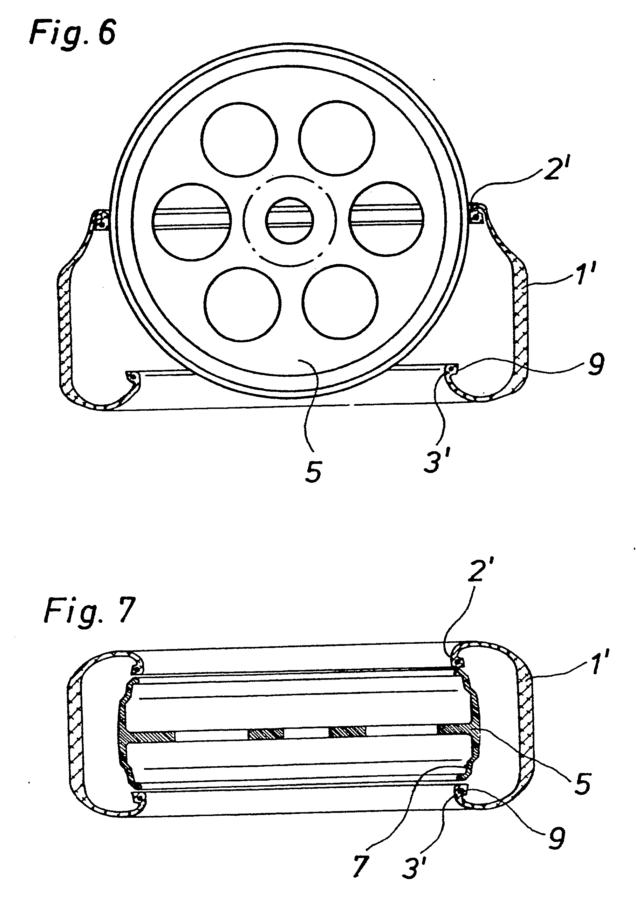

Die vorstehend beschriebene Montage wird nunmehr beim zweiten Reifenwulst 3 angewendet, danach kann der Reifen 1 mit Luft beaufschlagt werden. Fig. 5 stellt den vollständig montierten Reifen 1 dar.

Anhand der Fig. 6 und 7 wird die Montage eines anderen Reifens 1' beschrieben, bei dem der axiale Abstand der Wülste 2', 3' in der Vulkanisierstellung etwa der Laufflächenbreite entspricht oder kleiner ist und bei dem die Sitzflächen 9 an den Wülsten 2', 3' bereits in der Normalstellung des nichtmontierten Reifens 1' etwa parallel zu den Felgensitzflächen 7 einer im Innenraum befindlichen Felge 5 verlaufen (Fig. 7).

Zunächst wird die Felge 5 wieder mit senkrecht zur Drehachse des Reifens 1' stehender Drehachse in den Innenraum des Reifens 1' eingeführt und dann um 90° gedreht.

Das beim vorherigen Reifen 1 beschriebene anschließende Krempeln entfällt, weil beim Reifen 1' nach Fig. 7 die Sitzfläche 9 am Wulst 2', 3' im Querschnitt bereits parallel zur Felgensitzfläche 7 verläuft.

Die weiteren Verfahrensschritte (Einführung einer Wulstpartie in die Felgenvertiefung, Nachführen des gesamten Wulstumfangs, Wiederholen am anderen Wulst, Aufpumpen des Reifens) entsprechen den beim ersten Montageverfahren beschriebenen.

Es sollte angemerkt werden, daß es bei den vorstehend beschriebenen Montageverfahren in Einzelfällen, z. B. für einen günstigeren Einsatz von Maschinen, vorteilhaft sein kann, Reifen und Felge unter einem Winkel aufeinanderzuzubewegen, der etwas von 90° abweicht, jedoch sollte diese Abweichung nicht größer als 25° sein.

## Patentansprüche

1. Verfahren zur Montage eines Reifens auf eine Felge, für Reifen, bei denen entweder der axiale Abstand der Wülste in der Vulkanisierstellung wesentlich größer ist als die Laufflächenbreite und die Wülste gegebenenfalls um den Kern schwenkbar sein können oder bei denen der axiale Abstand der Wülste in der Vulkanisierstellung etwa gleich oder kleiner ist als die Laufflächenbreite, und für Felgen, bei denen die Sitzflächen für die Reifenwülste am inneren Umfang der Felge neben jeweils einem sich radial nach innen erstreckenden Felgenhorn angeordnet sind und bei denen sich neben den Sitzflächen umlaufende Vertiefungen befinden, deren Grund einen im Vergleich zum Durchmesser der Sitzflächen größeren Durchmesser aufweist, gekennzeichnet durch die aufeinander folgenden Schritte:

a) Felge und Reifen werden aufeinander zubewegt, wobei die Drehachsen im wesentlichen senkrecht mit maximalen Abweichungen bis zu ± 25° aufeinander stehen,

b) die Felge wird in Richtung der Drehachse des Reifens in dessen Innenraum hineingeführt, wobei zumindest der eine Reifenwulst zwischenzeitlich eine ovale Form annimmt,

c) die Felge wird gedreht, so daß die Drehachse der Felge und die des Reifens parallel verlaufen bzw. zusammenfallen,

d) im Falle eines Reifens mit großem axialem Wulstabstand wird der Reifen im Wulst- bzw. Seitenwandbereich so weit gekrempelt, bis die Sitzfläche am Reifenwulst und die Sitzfläche auf der Felge im Querschnitt etwa parallel zueinander verlaufen,

e) eine Partie des Wulstes wird in die Felgenvertiefung eingeführt und danach der Wulst über seinen gesamten Umfang nachgeschoben,

f) die Verfahrensschritte d) und e) werden beim anderen Wulst wiederholt,

g) die Wülste werden durch eine Beaufschlagung des Reifens mit Luft auf die Felgensitzflächen gebracht.

2) Verfahren nach Anspruch 1, dadurch gekennzeichnet, daß vor dem Verfahrensschritt b) der Reifen zumindest im Bereich des einen Wulstes durch eine äußere Kraft in eine ovale Form gebracht wird.

**Revendications**

1. Procédé de montage d'un pneumatique sur une jante, destiné à des pneumatiques dont la distance axiale séparant les talons en position de vulcanisation est nettement supérieure à la largeur de la bande de roulement et dont les talons peuvent le cas échéant pivoter autour de la tringle, ou bien dont la distance axiale séparant les talons en position de vulcanisation est approximativement égale, ou inférieure, à la largeur de la bande de roulement, et à des jantes où la surface d'appui de chaque talon est disposée sur la circonférence intérieure de la jante, à côté du bourrelet de jante correspondant s'étendant radialement vers l'intérieur, et où l'on trouve à côté des surfaces d'appui des évidements circulaires dont le fond est d'un diamètre supérieur à celui des surfaces d'appui, caractérisé par la succession des opérations suivantes:

a) la jante et le pneumatique sont rapprochés l'un vers l'autre, leurs axes de rotation restant réciproquement perpendiculaires, avec une tolérance maximale de ± 25°,

b) la jante est introduite à l'intérieur du pneumatique en direction de l'axe de rotation de ce dernier, au moins un des talons du pneumatique prenant entretemps une forme ovale,

c) la jante est tournée de façon que son axe de rotation soit parallèle ou coïncide avec celui du pneumatique,

d) en ces d'un pneumatique dont la distance axiale séparant les talons est grande, le pneumatique est rabattu au niveau du talon ou du flanc jusqu'à ce que la surface d'appui du talon et la surface d'appui de la jante deviennent, vues en coupe transversale, sensiblement parallèles entre elles,

e) une partie du talon est introduite dans l'évidement de la jante, puis le talon y est poussé sur toute sa circonférence,

f) les opérations d) et e) sont répetées pour l'autre talon,

g) les talons sont plaqués contre les surfaces d'appui de la jante, en gonflant le pneumatique,

2. Procédé selon la revendication 1, caractérisé par le fait qu'avant l'opération b), le pneumatique est amené à une forme ovale au niveau d'au moins un des talons, par l'action d'une force extérieure.

**Claims**

1. Method of assembling a tyre on a rim, for tyres wherein either the axial spacing between the beads in the vulcanising position is substantially greater than the width of the tread surface and the beads may possibly be pivotable about the core, or wherein the axial spacing between the beads in the vulcanising position is substantially identical to, or smaller than, the width of the tread surface, and for rims wherein the seating surfacee for the tyre beads are disposed on the internal circumference of the rim, each particular surface being adjacent a rim flange which extends radially inwardly, and wherein circular recesses are situated adjacent the seating surfaces, the base of such recesses having a diameter which is greater than the diameter of the seating surfaces, characterised by the steps which follow one another in succession:

a) rim and tyre are moved towards one another, the rotational axes extending substantially vertically to one another with maximum deviations up to ± 25°;

b) the rim is inserted into the interior of the tyre in the direction of the rotational axis of the tyre, at least one tyre bead meanwhile adopting an oval shape;

c) the rim is rotated so that the rotational axis of the rim and that of the tyre extends parallel to one another or coincide;

d) in the case of a tyre with a large axial spacing between the beads, the tyre in the bead or side wall region is compressed to such an extent that the seating surface on the tyre bead and the seating surface on the rim, in crosssection, extend substantially parallel to one another;

e) a portion of the bead is inserted into the recess in the rim and then the whole circumference of the bead is inserted subsequently;

f) the procedural steps d) and e) are repeated with the other bead;

g) the beads are placed upon the seating surfaces of the rim when the tyre is filled with air.

2. Method according to claim 1, characterised in that, before procedural step b), the tyre - at least in the region of one bead - is brought into an oval shape by an external force.

*Fig. 1*

*Fig. 2*

Fig. 3

Fig. 4

Fig. 5

*Fig. 6*

*Fig. 7*